# EUROPÄISCHE PATENTSCHRIFT

(11) **EP 1 195 868 B1**
(45) Veröffentlichungstag und Bekanntmachung des Hinweises auf die Patenterteilung: **31.12.2008**
(21) Anmeldenummer: 01123652.8
(22) Anmeldetag: 02.10.2001
(51) Int. Cl.: H02B 1/04, H02B 1/06

(54) **Haltevorrichtung für Frontabdeckungen von Elektroinstallationen**
Holding device for front covers of electrical installations
Dispositif de maintien des faces frontales d'installations électriques

(30) Priorität: 04.10.2000 DE 10048951
(43) Veröffentlichungstag der Anmeldung: 10.04.2002
(73) Patentinhaber: Hager Electro GmbH & Co. KG, 66131 Saarbrücken (DE)
(72) Erfinder: Hein, Peter, 66386 St. Ingbert (DE); Noll, Jürgen, 66440 Blieskastel (DE); Hinschberger, Peter, 66131 Saarbrücken (DE)
(74) Vertreter: Bernhardt, Reinold

(56) Entgegenhaltungen:
- EP-A- 0 325 370
- DE-U- 9 110 850
- DE-U- 29 703 980

## Beschreibung

Die Erfindung betrifft eine Haltevorrichtung für Frontabdeckungen von Elektroinstallationen, insbesondere Stromverteilungsanlagen, mit von einer Trägerbasis vorstehenden Trögertürmen zur an den der Trögerbasis abgewandten Turmenden lösbaren Halterung der Frontabdeckung.

Es ist durch Benutzung bekannt, solche Trägertürme z.B. in Verteilerkästen zu verwenden, wo sie senkrecht von entlang der Kastenrückwand verlaufenden Trägerschienen vorstehen, welche eine Trägerbasis unter anderem für die Türme bilden. An ihren den Trägerschienen abgewandten Enden weisen die Trägertürme Einrichtungen für die Befestigung der Frontabdeckung auf, z.B. Stecköffnungen für einen Befestigungsbolzen. Wie aus der nachveröffentlichten DE 199 35 445 hervorgeht, kommen als Trägerbasis ferner mit den genannten Trägerschienen längsseits verbindbare Fußschienen eines Moduls für den Einbau in ein Verteilergehäuse einer Stromverteilungsanlage in Betracht, wobei die Fußschienen zueinander parallel im Abstand angeordnet und über Querträgereinrichtungen, z.B. Hutprofilschienen, miteinander verbunden sind. Vier Trägertürme sind dann jeweils an den Enden der Fußschienen angeordnet, deren vordere Enden mit den Ecken einer rechteckigen Frontabdeckung für den Modul verbindbar sind.

Die Trägertürme erstrecken sich nahezu über die gesamte Tiefe der Stromverteilungsanlage, wo sie durchzuführende Installationsarbeiten, insbesondere die Verlegung und den Anschluss von Kabeln, behindern. Andererseits würde es bei nachträglicher Anbringung der Trägertürme an den Trägerschienen bzw. Fußschienen erhebliche Schwierigkeiten bereiten, während der Verlegung von Kabeln den für die Trägertürme benötigten Platz freizuhalten.

Die DE 91 10 850 U1 beschreibt eine Haltevorrichtung für die abnehmbare Frontabdeckung eines elektrischen Verteilerkastens, welche von dem Verteilerkasten vorstehende Haltedome mit einer Öffnung am freien Ende aufweist. Solche Haltedome erstrecken sich auch von der Abdeckung. Zur Befestigung der Abdeckung am Verteilerkasten werden die Dome an ihren freien Enden aneinandergesetzt und die Abdeckung am Verteilerkasten mit Hilfe sich durch die Domöffnungen erstreckender Verbindungsmittel befestigt.

Aus der EP 0325 370 A1 und der DE 297 03 980 U1 sind Haltevorrichtungen bekannt, die zur Befestigung der Abdeckung an der Trägerbasis mit von der Trägerbasis vorstehenden, einteilig mit der Trägerbasis hergestellten Trägertürmen versehen sind.

Der vorliegenden Erfindung liegt die Aufgabe zugrunde, eine neue Haltevorrichtung für Frontabdeckungen von Elektroinstallationen der eingangs erwähnten Art zu schaffen, welche an Elektroinstallationen, insbesondere Stromverteilungsanlagen, durchzuführende Montagearbeiten erleichtert.

Die diese Aufgabe lösende Haltevorrichtung nach der Erfindung ist **dadurch gekennzeichnet, daß** die Trägertürme aus mehreren Teilen zusammensetzbar sind.

Gemäß dieser Erfindungslösung kann z.B. ein mit der Trägerbasis verbundener oder verbindbarer Teil des Trägerturms bei der Montage einer Stromverteilungsanlage frühzeitig, vorzugsweise schon werksseitig, eingebaut werden. Indem sich dieser Trägerturmteil nicht über die gesamte Höhe bzw. Tiefe der Stromverteilungsanlage erstreckt, stört er nachfolgende Montage- und Verdrahtungsarbeiten nicht. Andererseits wird der für die Trägertürme benötigte Platz freigehalten. Nach Abschluß dieser Arbeiten bildet der bereits montierte Trägerturmteil einen die genaue Positionierung eines weiteren Trägerturmteils sichernden Sitz. So kann nach Beendigung der Montage- und Verdrahtungsarbeiten der Trägerturm mit geringem Arbeitsaufwand bequem komplettiert werden, z.B. unter Herstellung einer Steckverbindung zwischen den Trägerturmteilen. Bei werksseitiger Verbindung des angrenzenden Trägerturmteils mit der Trägerbasis kann gegenüber dem Einbau kompletter Trägertürme eine Verringerung der Bauhöhe auszuliefernder Module und eine Verringerung des erforderlichen Transportvolumens erreicht werden, indem die weiteren Trägerturmteile nur beigelegt werden. Gegebenenfalls sind mehrere Trägerturmteile unterschiedlicher Länge beigelegt, so daß noch vor Ort bei der Montage z.B. einer Stromverteilungsanlage deren Bauhöhe endgültig festgelegt werden kann.
Der an die Trägerbasis angrenzende Trägerturmteil kann einstückig mit einer Trägerschiene als Trägerbasis, vorzugsweise einer Fußschiene des oben erwähnten Anbaumoduls, verbunden sein.

Vorzugsweise lassen sich die Trägerturmteile zur Bildung des Trägerturms lösbar miteinander verbinden. Bei Reparatur- oder Ergänzungsarbeiten an einer Stromverteilungsanlage kann so durch Entfernen der dem Monteur zugewandten Trägerturmteile Baufreiheit geschaffen werden.

Die oben erwähnte Steckverbindung zwischen den Trägerturmteilen ist vorzugsweise einrastbar, so daß die Gefahr einer ungewollten Ablösung von Trägerturmteilen beseitigt ist.

In weiterer Ausgestaltung der Erfindung kann zwischen der Trägerbasis und dem an die Trägerbasis angrenzenden Trägerturmteil eine Steckverbindung herstellbar sein, z.B. derart, daß dieser Trägerturmteil in Schienenlängsrichtung auf die Trägerschiene aufsteckbar ist, wozu er z.B. einen Fuß mit einer an das Profil der Trägerschiene angepaßten Durchgangsöffnung aufweisen kann. Zur Arretierung des betreffenden Trägerturmteils in Schienenlängsrichtung dient zweckmäßig eine Schraubverbindung zwischen dem betreffenden Trägerturmteil und der Trägerschiene.
Alternativ kann der an die Trägerbasis angrenzende Trägerturmteil mit Einrichtungen für eine Rastbefestigung an der Trägerbasis oder an einem die Elektroinstallation aufnehmenden Gehäuse versehen sein. Entsprechend ist es denkbar, die betreffenden Trägerturmteile mit den Enden parallel und im Abstand zueinander angeordneter Trägerschienen eines Trägergerüsts zu verbinden, und die Trägerturmteile in den Eckbereichen eines das Trägergerüst aufnehmenden Gehäuses einzurasten.

Die erwähnten Trägerschienen können, wie bereits erwähnt, Fußschienen eines für den Einbau in eine Stromverteilungsanlage vorgesehenen Moduls sein, wobei die Trägertürme an vier Ecken des Moduls von den Fußschienen vorstehen.

In weiterer vorteilhafter Ausgestaltung der Erfindung kann den Trägertürmen innerhalb der Elektroinstallation über ihre Funktion als Halter der Frontabdeckung hinaus wenigstens eine weitere Funktion, vorzugsweise Haltefunktionen, zukommen. Hier kommt insbesondere die Halterung seitlicher Schutzabdeckungen eines Einbaumoduls oder die Halterungen einer durchsichtigen, insbesondere über einer Sammelschiene anzuordnenden Schutzscheibe in Betracht.

In weiterer Ausgestaltung der Erfindung können miteinander verbundene Doppel- oder Vierfachträgertürme zur modulübergreifenden Anordnung auf aneinandergrenzenden Trägerbasen benachbarter Module vorgesehen sein. Das heißt, in Stromverteilungsanlagen, in denen eine Vielzahl von Modulen eingebaut ist, können solche Doppeltürme an Stoßstellen zwischen Modulen angeordnet werden, wobei z.B. ein Trägerturm eines Doppelturms einem Modul und der andere Trägerturm des Doppelturms dem angrenzenden Modul zugeordnet ist.

Für die Bildung von Trägertürmen lassen sich Bausätze mit untereinander in bezug auf ihre Verbindung kompatiblen Trägerturmteilen herstellen, so daß z.B. Trägertürme mit unterschiedlichen Gesamthöhen und unterschiedlichen Zusatzfunktionen zusammensetzbar sind. Die unterschiedlichen Höhen können sich aus vorgeschriebenen Normrastermaßen ergeben, wobei z.B. Turmteile mit den unterschiedlichen Normformaten von Hutprofilschienen angepaßten Höhen herstellbar sind. So läßt sich bezogen auf die Zahl der erfüllbaren Zusatzfunktionen trotz mehrteiliger Ausbildung der Trägertürme durch solche Bausätze kompatibler Trägerturmteile insgesamt eine Verringerung der Teilezahl von Stromverteilungsanlagen erreichen.

Die Erfindung soll nun anhand von Ausführungsbeispielen weiter erläutert werden. Es zeigen:
- Fig. 1: einen Einbaumodul für Verteilerkästen, wobei Trägertürme gemäß einem ersten und zweiten Ausführungsbeispiel nach der Erfindung verwendet sind,
- Fig. 2: einen Einbaumodul für Verteilerkästen, in dem Trägertürme gemäß dem ersten Ausführungsbeispiel nach der Erfindung verwendet sind,
- Fig. 3: einen weiteren Einbaumodul, in dem Trägertürme gemäß dem ersten Ausführungsbeispiel nach der Erfindung verwendet sind,
- Fig. 4a: bis 4c Einzeldarstellungen des Trägerturms gemäß dem ersten Ausführungsbeispiel in drei verschiedenen perspektivischen Ansichten,
- Fig. 5a: und 5b Einzeldarstellungen des Trägerturms gemäß dem zweiten Ausführungsbeispiel in zwei verschiedenen perspektivischen Ansichten,
- Fig. 6a: und 6b Einzeldarstellungen eines Trägerturms gemäß einem dritten Ausführungsbeispiel nach der Erfindung in zwei verschiedenen perspektivischen Ansichten,
- Fig. 7: Einzeldarstellungen eines mit dem Trägerturm nach dem ersten Ausführungsbeispiel verbindbaren Halterungsteils in zwei verschiedenen perspektivischen Ansichten, und
- Fig. 8: einen Doppelträgerturm nach der Erfindung und ein in den Doppelträgerturm einsteckbares Halteelement in einer Explosionsdarstellung.

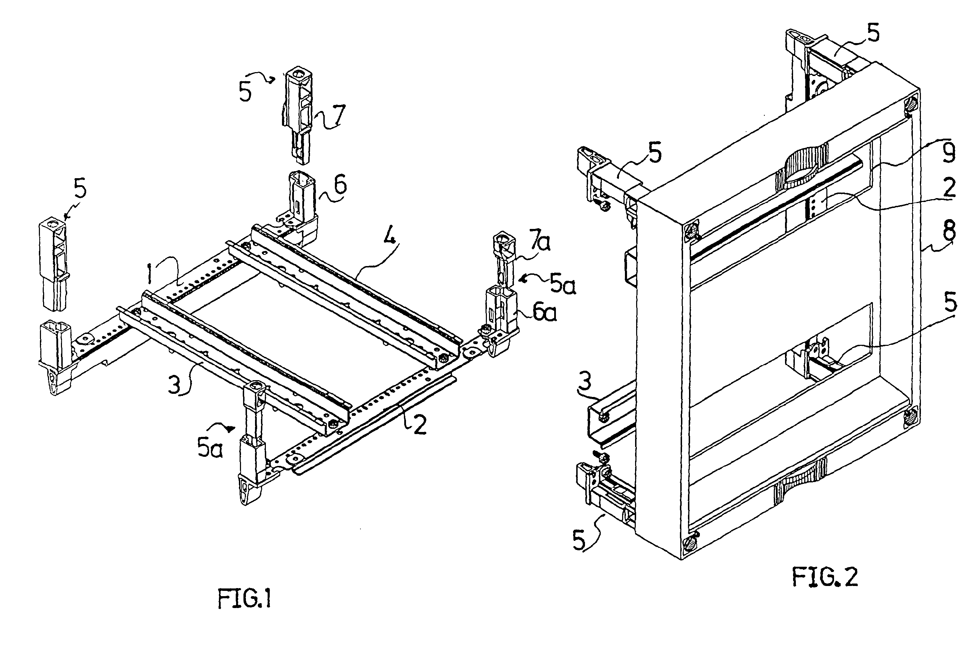

Mit den Bezugszeichen 1 und 2 sind in der Fig. 1 aus Metall bestehende Fußschienen bezeichnet, die als Basisteile eines Moduls zum Einbau in Gehäuse von Stromverteilungsanlagen dienen. Über die Fußschienen 1 und 2 kann der Modul z.B. mit Trägerschienen verbunden werden, welche vertikal entlang der Rückwand eines Verteilerkastens auf dessen Innenseite verlaufen.

In dem betreffenden Ausführungsbeispiel sind die Fußschienen 1 und 2 über metallische Hutprofilschienen 3 und 4 miteinander verbunden. Die Hutprofilschienen 3 und 4 sind an ihren Enden jeweils mit den Fußschienen 1 und 2 verschraubt und dienen zur Aufnahme von Modulgeräten, wie z.B. Sicherungsschaltern.

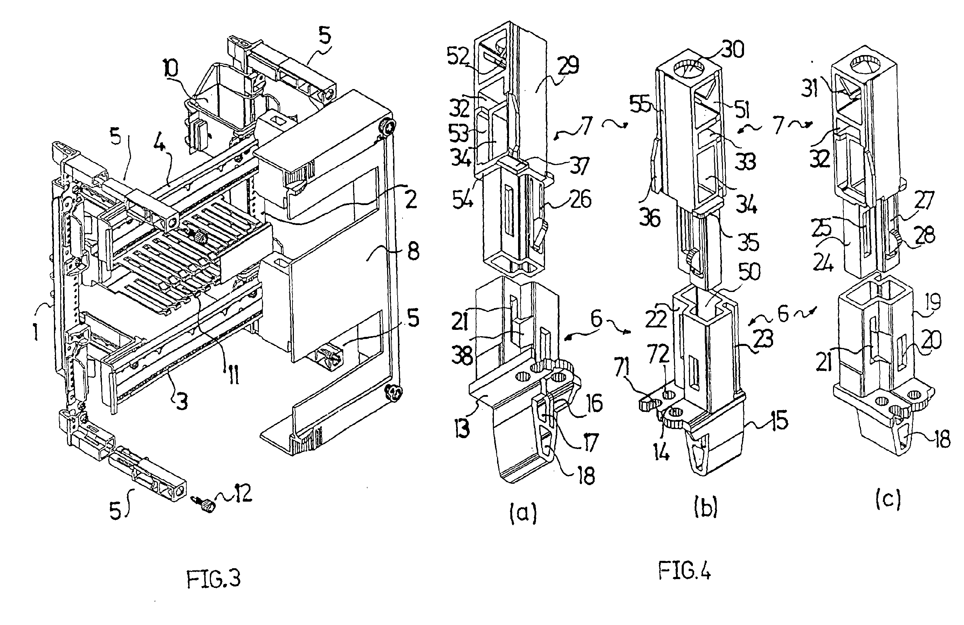

An ihren Enden sind auf die Fußschiene 1 in Schienenlängsrichtung Trägertürme 5 aufgesteckt, welche zweiteilig mit einem Fußteil 6 und einem auf das Fußteil aufsteckbaren Steckteil 7 ausgebildet sind. Die aus Kunststoff hergestellten Trägertürme 5 sind weiter unten anhand der Fig. 4 im Detail beschrieben.

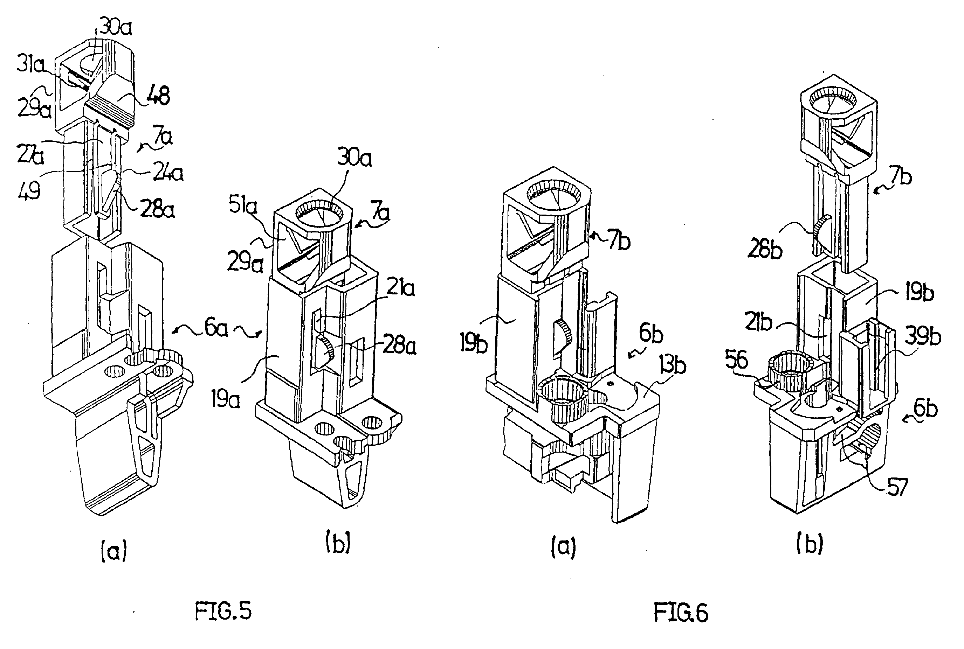

In einem vollständig aufgebauten Modul sind an allen vier Ecken, d.h. an den Enden der Fußschienen 1 und 2 gleichartige Trägertürme angebracht. Nur als Beispiel sind in Fig. 1 auf die Trägerschiene 2 von den Trägertürmen 5 verschiedene Trägertürme 5a aufgesteckt, die wie die Trägertürme 5 zweiteilig mit einem Fußteil 6a und einem Steckteil 7a ausgebildet sind. Der Steckteil 7a hat eine geringere Länge als der Steckteil 7. Die Trägertürme 5a sind weiter unten anhand der Fig. 5 genauer beschrieben.

In Fig. 2 ist ein die vorangehend beschriebenen Bauteile verwendenden Modul gezeigt, der ausschließlich Trägertürme 5 enthält. Die Fußschiene 1 ist in Fig. 2 weggelassen. An den Trägertürmen 5 ist eine Abdeckung 8 mit Fenstern 9 angebracht. Durch die Fenster 9 hindurch sind auf den Trägerschienen 3 und 4 anbringbare Modulgeräte von außen her zugänglich. Mit dem Weglassen der Fußschiene 1 soll angedeutet werden, daß die Trägertürme 5 des Moduls nicht nur über eine Fußschiene sondern auch direkt an einer mit einem Verteilerkasten verbundenen Trägerschiene angebracht werden könnten.

Auch Fig. 3 zeigt einen die vorangehend beschriebenen Teile verwendenden Modul zum Einbau in einen Verteilerkasten, in dem die Trägertürme 5 zum Halten der Abdeckung 8 verwendet sind. In diesem Modul sind die Hutprofilschienen 3 und 4 über U-förmige Bügel 10 mit den Fußschienen 1 und 2 verbunden, wobei die U-förmigen Bügel 10 zur Bildung von Kabelführungen dienen, in denen Kabel parallel zu den Fußschienen geführt sind. In dem Modul von Fig. 3 ist eine weitere Kabelführung 11 vorgesehen, in welcher sich Kabel senkrecht zu den Fußschienen führen lassen und aus der Kabel zur Verbindung mit auf den Hutprofilschienen 3 und 4 angebrachten Modulgeräten abzweigbar sind.

Zur Befestigung der Abdeckung 8 sind Schnappbolzen 12 verwendbar, die in einer Drehstellung einrasten und sich in einer gegenüber dieser Stellung um 90° verdrehten Stellung aus der Rastbefestigung lösen lassen.

Es versteht sich, daß die beiden endseitig auf eine der Fußschienen aufgesteckten Trägertürme 5 zueinander spiegelbildlich ausgebildet sind.

Es wird nun auf Fig. 4 Bezug genommen, wo der Trägerturm 5 in drei verschiedenen perspektivischen Ansichten gezeigt ist.

Der, wie auch der Steckteil 7 einstückig als Kunststoffspritzgußteil hergestellte, Fußteil 6 weist eine Befestigungsplatte 13 mit einer Bohrung 14 sowie zwei weiteren Bohrungen 71 und 72 auf.

Von einer Seite der Platte erstreckt sich ein Steckfuß 15, in dem ein im Querschnitt gewinkelter Durchgang 16 gebildet ist. Bei 17, 18 sind nicht durchgehende Ausnehmungen zur Vermeidung von Materialhäufungen im Steckfuß 15 vorgesehen.

Von der dem Steckfuß 15 abgewandten Seite der Befestigungsplatte 13 erstreckt sich eine Steckhülse 19 mit einem Steckkanal 50. In dem gezeigten Ausführungsbeispiel sind die Steckhülse und der Steckkanal stufenförmig ausgebildet, und die Steckhülse 19 weist bei 20 eine Rastöffnung für eine Stecknase auf. In einer Abstufung 22 der Steckhülse 19 sind eine weitere Rastöffnung 21 und eine Ausnehmung 38 gebildet. An einer zu der Abstufung 22 diametralen Ecke der Steckhülse 19 ist eine sich über die gesamte Länge der Steckhülse 19 erstreckende Rille 23 gebildet, die zum freien Stirnende der Steckhülse 19 hin öffnet.

Entsprechend der Form der Steckhülse 19 weist der Steckteil 7 einen stufenförmigen Steckschaft 24 auf, welcher hohl und mit einer Öffnung 25 in Form eines Längsschlitzes versehen ist, welcher beim Einstecken des Steckteils in den Fußteil mit der Öffnung 21 des Fußteils zur Deckung kommt.

In einer Wand des hohlen Steckschafts 24 ist bei 26 ein U-Schlitz vorgesehen, durch den eine elastisch bewegbare Rastlippe 27 gebildet ist. Von der Rastlippe 27 steht eine Rastnase 28 für den Eingriff in die Rastöffnung 20 der Steckhülse 19 vor. An den Steckschaft schließt sich eine Turmverlängerung 29 an, die an ihrem dem Steckschaft 24 abgewandten freien Ende ein Steckloch 30 für den obengenannten Schnappbolzen 12 aufweist. Das Steckloch 30 öffnet nach innen zu einem an gegenüberliegenden Seiten offenen Hohlraum 51, in welchem unter Bildung einer Mulde und eines sich entlang der Muldenfußlinie erstreckenden Spalts 52 Rastlippen 31 für die Verrastung mit dem Schnappbolzen 12 vorstehen. An den beidseitig offenen, die Rastlippen 31 enthaltenen Hohlraum 51 schließt sich ein Abschnitt mit Einsenkungen 32 und 33 an, welche der Vermeidung von Materialhäufungen dienen.

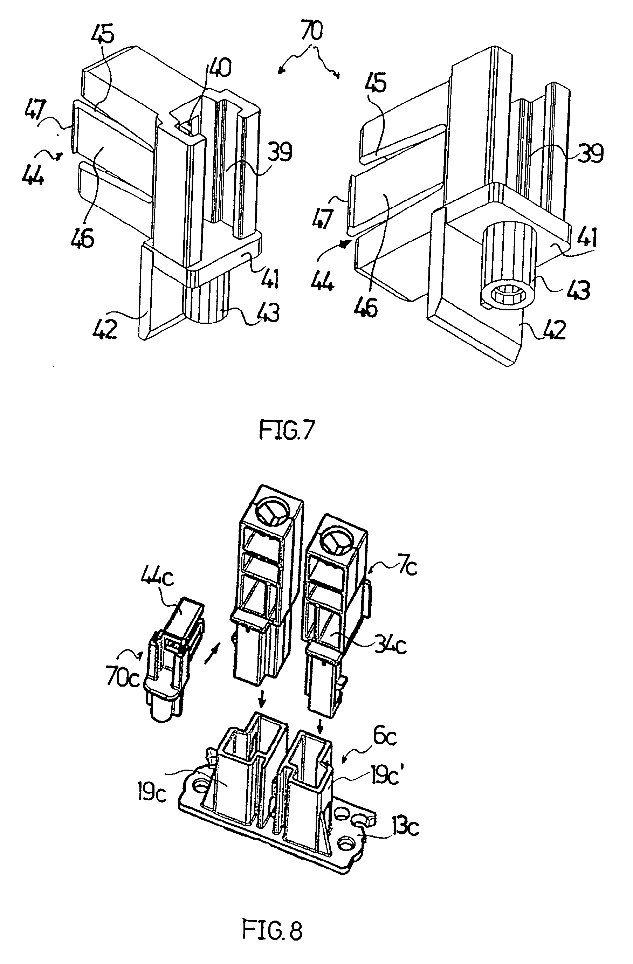

Ein weiterer Abschnitt der Turmverlängerung 29 weist ein durchgehendes, im Querschnitt rechteckiges Steckloch 34 für ein an den Trägerturm ansteckbares Halteelement auf, welches weiter unten anhand von Fig. 7 und 8 näher erläutert wird.

Das Steckloch 34 schließt auf einer Seite bündig mit einer Längsseitenwand der Turmverlängerung 29 ab, während es auf der anderen Seite gegenüber der betreffenden Seitenwand der Turmverlängerung zurückversetzt in einen einseitig offenen Hohlraum 53 hinein öffnet, der zum Teil durch die Einsenkung 32 gebildet ist.

Unterhalb des Stecklochs 34 erstreckt sich von der Turmverlängerung 29 eine Anschlagplatte 35, welche bündig mit dem Ende der Turmverlängerung 29 abschließt, das unter Bildung einer Abstufung 54 an den Steckschaft 24 angrenzt.

Auf der der Anschlagplatte 35 gegenüberliegenden Seite erstreckt sich von der Turmverlängerung 29 seitlich eine Nase 36, die entlang einer durchgehenden Längsrille 55 verläuft und an eine Ausnehmung 37 angrenzt, die in der zwischen der Turmverlängerung 29 und dem Steckschaft 24 gebildeten Abstufung 54 gebildet ist.

Zur Montage eines Moduls gemäß den Fig. 1 bis 3 sind die Fußteile 6 der Trägertürme 5 auf die Enden der Fußschienen 1 und 2 aufzustecken, wobei die Fußschienen in den gewinkelten Steckkanal 16 der Steckfüße 15 der Fußteile 6 eingeführt werden. Unter Nutzung der Bohrung 14 kann dann eine Fixierung des Trägerturms auf der Fußschiene durch eine Schraubverbindung zwischen Trägerturm und Fußschiene erfolgen. Ein die Bohrungen 71 und 72 aufweisender Teil der Befestigungsplatte 13 ist gegenüber dem übrigen Teil dieser Platte um die Materialdicke der Fußschiene verstärkt. Über diesen verstärkten Teil der Befestigungsplatte 13 kann, wie oben anhand von Fig. 2 erläutert ist, der Trägerturm direkt an einer Trägerschiene angebracht werden, wobei durch die Verstärkung die Turmhöhe erhalten bleibt.

Zur Fertigstellung der Trägertürme 5 werden die Steckteile 7 mit ihren Steckschäften 24 in den Steckkanal 50 oder die Steckhülse 19 eingesteckt, wobei die Rastnase 28 in die Rastöffnung 20 in der Steckhülse 19 einrastet. Dieses Einstecken der Steckteile kann ggf. erst bei Installationsarbeiten vor Ort nach der Montage von Modulgeräten und deren Anschlußverdrahtung erfolgen, wobei dann abschließend die Frontabdeckung 8 mittels der Rastbolzen 12 an den Türmen 5 befestigt wird.

Vor der Fertigstellung der Türme können die Rillen 23 von einander gegenüberliegend auf verschiedenen Fußschienen angebrachten Fußteilen 6 dazu benutzt werden, um seitliche Schutzabdeckungen einzuschieben, die dann mit dem Einstecken der Steckteile 7 in die Fußteile 6 fixiert sind. Zur Fixierung weiterer seitlicher Schutzabdeckungen sind ferner die Öffnungen 21 und 25 sowie die Ausnehmung 38 verwendbar, welche Stecknasen solcher seitlicher Schutzabdeckungen aufnehmen können. Zur Befestigung weiterer seitlicher Schutzabdeckungen können die Nase 36, die Rille 55 sowie die Ausnehmung 57 an der Turmverlängerung 29 verwendet werden.

In die Stecklöcher 34 einander gegenüberliegend angeordneter Trägertürme 5 auf verschiedenen Fußschienen des Moduls kann ein Halteelement 70 für eine Sammelschiene, wie es in Fig. 7 und 8dargestellt ist, eingesteckt werden.

Das Halteelement 70 weist einen an einer Stirnseite und einer Längsseite offenen Steckkanal 39 auf, in welchem eine Rastöffnung 40 für den Eingriff einer Rastnase 40 eines in den Steckkanal 39 einführbaren Steckelements vorgesehen ist. Der offenen Stirnseite gegenüberliegend ist der Steckkanal 39 durch eine Stirnplatte 41 begrenzt, an die sich ein plattenförmiger Ansatz 42 und ein hohlzylindrischer Ansatz 43 anschließen, wobei der hohlzylindrische Ansatz 43 über einen Steg mit dem plattenförmigen Ansatz 42 verbunden ist und sich dessen Zylinderachse in Längsrichtung des Steckkanals 39 erstreckt.

Von einer Längsseitenwand des Steckkanals 39 steht eine Stecknase 44 zum Einführen in das obengenannte Steckloch 34 vor. Die hohle Stecknase 44 weist Schlitze 45 auf, durch die auf gegenüberliegenden Seiten der Stecknase 44 elastisch biegbare Rastlippen 46 mit einer Rastnase 47 gebildet sind. Die Stecknase 44 ist an ihrem in Steckrichtung vorderen Ende einschließlich der Rastlippen 46 abgeschrägt, um die Einführung in das Steckloch 34 zu erleichtern.

In die Steckkanäle auf verschiedenen Fußschienen einander gegenüberliegend angeordneter Trägertürme 5 können Sammelschienen eingesteckt werden, die an ihren beiden Enden den Steckkanälen 39 entsprechende Stecknasen mit einer Rastlippe aufweisen. In einer um 180° gedrehten Steckposition der Halteelemente können die Ansätze 42 zur Halterung einer durchsichtigen Schutzabdeckung für eine Sammelschiene genutzt werden.

Es wird nun auf Fig. 5 Bezug genommen, wo der eingangs der Figurenbeschreibung erwähnte Trägerturm 5a im einzelnen dargestellt ist.

Dieser Trägerturm weist einen Fußteil 6a und einen Steckteil 7a auf, wobei der Fußteil 6a mit dem Fußteil 6 des Trägerturms 5 übereinstimmt und hier nicht weiter zu erläutern ist.

Im Unterschied zu dem Steckteil 7 des Trägerturms 5 ist an dem Steckteil 7a eine wesentlich kürzere Turmverlängerung 29a mit einem Steckloch 30a und Rastlippen 31a in einem auf zwei Seiten offenen Hohlraum 51a des Steckteils 7a gebildet.

An die bei 48 abgeschrägte Turmverlängerung schließt sich ein Steckschaft 24a an, der im Unterschied zu dem Steckschaft 24 der Turmverlängerung 29 nicht gestuft ist, sondern einen rechteckigen Querschnitt aufweist. Durch Längsschlitze 49 ist eine elastisch verbiegbare Rastlippe 27a mit einer Rastnase 28a gebildet.

Wie Fig. 5b zu entnehmen ist, rastet die Nase 28a beim Einstecken des Steckteils 7a in den Fußteil 6a in eine Rastöffnung 21 a an einer Steckhülse 19a ein.

Es wird nun auf Fig. 6 Bezug genommen, in deren Teilfiguren a und b ein weiteres Ausführungsbeispiel für einen Trägerturm in zwei verschiedenen perspektivischen Ansichten gezeigt ist.
Der Trägerturm weist einen Fußteil 6b und einen Steckteil 7b auf, wobei der Steckteil 7b mit dem vorangehend beschriebenen Steckteil 7a des Trägerturms von Fig. 5 übereinstimmt und daher an dieser Stelle nicht weiter erläutert zu werden braucht.

Der Fußteil 6b ist zur Befestigung an Trägerschienen eines Traggerüsts vorgesehen, das in ein Zähler- oder Verteilergehäuse einsetzbar ist, wobei über diesen Fußteil innerhalb des Gehäuses eine Einrastung erfolgt. Der Fußteil 6b ist insoweit in dem hier einbezogenen deutschen Gebrauchsmuster 297 03 937.3 beschrieben.

Abweichend von dem in diesem Gebrauchsmuster beschriebenen Fußteil weist der Fußteil 6b eine sich von einer Befestigungsplatte 13b erstreckende Steckhülse 19b mit einem dem Steckschaft 24a des Steckteils 7a von Fig. 5 entsprechenden Innenquerschnitt und eine Rastöffnung 21 b für den Eingriff einer Rastnase 28b des Steckteils 7b auf.

In der Befestigungsplatte 13b ist eine Bohrung zur Schraubbefestigung an der genannten Trägerschiene gebildet, wobei konzentrisch zu der Bohrung eine Führungshülse 56 angeordnet ist. Bei 57 sind Ausnehmungen für die Aufnahme eines Schnappmechanismus gebildet.

Von der Befestigungsplatte 13b erstreckt sich ferner ein Steckkanal 39b, welchem die gleiche Funktion wie dem Steckkanal 39 des Halteteils von Fig. 7 zukommt und der zur Aufnahme einer seitlichen Stecknase einer Sammelschiene dient.

Es wird auf Fig. 8 Bezug genommen, wo ein Doppelträgerturm mit einem Fußteil 6c dargestellt ist. Von einer gemeinsamen Befestigungsplatte 13 strecken sich Steckhülsen 19c und 19c'.

In die Steckhülsen 19c und 19c' sind zur Bildung kompletter Trägertürme die Steckteile 7c gemäß den eingezeichneten Pfeilen einführbar. Die Steckteile entsprechen den oben beschriebenen Steckteilen 7. In ein rechteckiges Steckloch 34c der Steckteile 7c ist eine Stecknase 44c eines Halteelements 70c einsteckbar. Das Halteelement 70c stimmt mit dem anhand von Fig. 7 beschriebenen Halteelement 70 überein.

## Patentansprüche

1. Haltevorrichtung für Frontabdeckungen von Elektroinstallationen, insbesondere Stromverteilungsanlagen, mit von einer Trägerbasis (1,2) vorstehenden Trägertürmen (5) zur an den der Trägerbasis (1,2) abgewandten Turmenden lösbaren Halterung der Frontabdeckung (8),
**dadurch gekennzeichnet,**
**daß** die Trägertürme (5) aus mehreren Teilen (6,7) zusammensetzbar sind.

2. Haltevorrichtung nach Anspruch 1,
**dadurch gekennzeichnet,**
**daß** sich die Trägerturmteile (6,7) zur Bildung des Trägerturms (5) lösbar miteinander verbinden lassen.

3. Haltevorrichtung nach Anspruch 1 oder 2,
**dadurch gekennzeichnet,**
**daß** zwischen den Trägerturmteilen (6,7) eine, vorzugsweise einrastende, Steckverbindung (19,24) herstellbar ist.

4. Haltevorrichtung nach einem der Ansprüche 1 bis 3,
**dadurch gekennzeichnet,**
**daß** der an die Trägerbasis (1,2) angrenzende Trägerturmteil (6) einstückig an die Trägerbasis angeformt oder lösbar mit der Trägerbasis (1,2) verbindbar ist.

5. Haltevorrichtung nach einem der Ansprüche 1 bis 4,
**dadurch gekennzeichnet,**
**daß** die Trägerbasis wenigstens zwei zueinander parallel und im Abstand angeordnete Trägerschienen (1,2) umfaßt, welche sich entlang der Rückwand eines die Elektroinstallation aufnehmenden Gehäuses erstrecken, und daß der an die Trägerbasis angrenzende Trägerturmteil (6) Enrichtungen (14,16) zur Verbindung mit einer solchen Trägerschiene (1,2) aufweist.

6. Haltevorrichtung nach einem der Ansprüche 1 bis 5,
**dadurch gekennzeichnet,**
**daß** zwischen der Trägerbasis (1,2) und dem an die Trägerbasis (1,2) angrenzenden Trägerturmteil (6) eine Steckverbindung herstellbar ist.

7. Haltevorrichtung nach Anspruch 6,
**dadurch gekennzeichnet,**
**daß** der an die Trägerbasis angrenzende Trägerturmteil (6) in Schienenlängsrichtung auf die Trägerschiene (1,2) aufsteckbar ist.

8. Haltevorrichtung nach einem der Ansprüche 1 bis 7,
**dadurch gekennzeichnet,**
**daß** der an die Trägerbasis angrenzende Trägerturmteil mit Einrichtungen (57) für eine Rastbefestigung an der Trägerbasis oder/und einem die Elektroinstallation aufnehmenden Gehäuse versehen ist.

9. Haltevorrichtung nach einem der Ansprüche 1 bis 8,
**dadurch gekennzeichnet,**
**daß** die Trägerschienen Fußschienen (1,2) eines für den Einbau in eine Stromverteileranlage vorgesehenen Moduls und die Trägertürme an vier Ecken des Moduls angeordnet sind.

10. Haltevorrichtung nach einem der Ansprüche 1 bis 9,
**dadurch gekennzeichnet,**
**daß** den Trägertürmen (5) innerhalb der Elektroinstallation über ihre Funktion als Halter der Frontabdeckung (8) hinaus wenigstens eine weitere Funktion, vorzugsweise Haltefunktion, zukommt.

11. Haltevorrichtung nach Anspruch 10,
**dadurch gekennzeichnet,**
**daß** miteinander verbundene Doppel- oder Vierfachträgertürme, vorzugsweise zur modulübergreifenden Anordnung auf aneinandergrenzenden Trägerbasen benachbarter Module, vorgesehen sind.

12. Haltevorrichtung nach einem der Ansprüche 1 bis 11,
**gekennzeichnet durch** einen Bausatz unterschiedlicher Trägerturmteile, die zur Bildung unterschiedlicher Trägerturmvarianten beliebig miteinander kombinierbar sind.

## Claims

1. Holding device for front covers of electrical installations, in particular power distribution systems, with mount towers (5) protruding from a mount base (1, 2) for detachably holding the front cover (8) on the tower ends remote from the mount base (1, 2), **characterized in that** the mount towers (5) can be assembled from a plurality of parts (6, 7).

2. Holding device according to Claim 1, **characterized in that** the mount tower parts (6, 7) can be connected detachably to one another so as to form the mount tower (5).

3. Holding device according to Claim 1 or 2, **characterized in that** a plug-type connection (19, 24), which preferably latches in, can be produced between the mount tower parts (6, 7).

4. Holding device according to one of Claims 1 to 3, **characterized in that** the mount tower part (6) adjoining the mount base (1, 2) is integrally formed on the mount base or can be connected detachably to the mount base (1, 2).

5. Holding device according to one of Claims 1 to 4, **characterized in that** the mount base comprises at least two mount rails (1, 2), which are arranged parallel to one another and at a distance from one another and extend along the rear wall of a housing accommodating the electrical installation, and **in that** the mount tower part (6) adjoining the mount base has devices (14, 16) for connection to such a mount rail (1, 2).

6. Holding device according to one of Claims 1 to 5, **characterized in that** a plug-type connection can be produced between the mount base (1, 2) and the mount tower part (6) adjoining the mount base (1, 2).

7. Holding device according to Claim 6, **characterized in that** the mount tower part (6) adjoining the mount base can be plugged onto the mount rail (1, 2) in the longitudinal direction of the rail.

8. Holding device according to one of Claims 1 to 7, **characterized in that** the mount tower part adjoining the mount base is provided with devices (57) for a latching fastening on the mount base and/or a housing accommodating the electrical installation.

9. Holding device according to one of Claims 1 to 8, **characterized in that** the mount rails are foot rails (1, 2) of a module provided for installation into a power distribution system and the mount towers are arranged at four corners of the module.

10. Holding device according to one of Claims 1 to 9, **characterized in that** at least one further function, preferably a holding function, is added to the mount towers (5) within the electrical installation in addition to its function as a holder for the front cover (8).

11. Holding device according to Claim 10, **characterized in that** interconnected twin or quadruple mount towers, preferably for module-covering arrangement on mutually adjoining mount bases of adjacent modules, are provided.

12. Holding device according to one of Claims 1 to 11, **characterized by** a construction kit of different mount tower parts, which can be combined with one another as desired so as to form different mount tower variants.

## Revendications

1. Dispositif de maintien de capots frontaux d'installations électriques, en particulier d'installations de distribution de courant, comportant des tours supports (5) faisant saillie depuis une base support (1, 2) pour maintenir de manière détachable le capot frontal (8) aux extrémités de tour détournées de la base support (1, 2),
**caractérisé en ce que**
les tours supports (5) peuvent être constituées par plusieurs parties (6, 7).

2. Dispositif de maintien selon la revendication 1,
**caractérisé en ce que**
les parties de tour support (6, 7) peuvent être reliées les unes aux autres de manière détachable pour former la tour support (5).

3. Dispositif de maintien selon la revendication 1 ou 2,
**caractérisé en ce que**
une connexion par enfichage (19, 24) de préférence par enclenchement peut être réalisée entre les parties de tour support (6, 7).

4. Dispositif de maintien selon l'une des revendications 1 à 3,
**caractérisé en ce que**
la partie de tour support (6) adjacente à la base support (1, 2) est conformée d'un seul tenant sur la base support ou peut être reliée de manière détachable à la base support (1, 2).

5. Dispositif de maintien selon l'une des revendications 1 à 4,
**caractérisé en ce que**
la base support comprend au moins deux rails supports (1, 2) agencés parallèlement l'un à l'autre et à distance l'un de l'autre, lesquels s'étendent le long de la paroi arrière d'un boîtier recevant l'installation électrique, et **en ce que** la partie de tour support (6) adjacente à la base support présente des systèmes (14, 16) destinés à être reliés à un tel rail support (1, 2).

6. Dispositif de maintien selon l'une des revendications 1 à 5,
**caractérisé en ce que**
une connexion par enfichage peut être établie entre la base support (1, 2) et la partie de tour support (6) adjacente.

7. Dispositif de maintien selon la revendication 6,
**caractérisé en ce que**
la partie de tour support (6) adjacente à la base support peut être enfichée sur le rail support (1, 2) en direction longitudinale de rail.

8. Dispositif de maintien selon l'une des revendications 1 à 7,
**caractérisé en ce que**
la partie de tour support adjacente à la base support est pourvue de systèmes (57) pour une fixation par enclenchement sur la base support ou/et d'un boîtier recevant l'installation électrique.

9. Dispositif de maintien selon l'une des revendications 1 à 8,
**caractérisé en ce que**
les rails supports sont des rails à semelle (1, 2) d'un module prévu pour le montage dans une installation de distribution de courant et les tours supports sont agencées aux quatre coins du module.

10. Dispositif de maintien selon l'une des revendications 1 à 9,
**caractérisé en ce qu'**à l'intérieur de l'installation électrique, il revient aux tours supports (5), au-delà de leur fonction en tant que retenue pour le capot frontal (8), au moins une autre fonction, de préférence une fonction de maintien.

11. Dispositif de maintien selon la revendication 10,
**caractérisé en ce que**
il est prévu des tours supports doubles ou quadruples, sur des bases supports adjacentes les unes aux autres, de modules voisins, pour réaliser de préférence un agencement coiffant les modules.

12. Dispositif de maintien selon l'une des revendications 1 à 11,
**caractérisé par** un kit de différentes parties de tours supports qui peuvent être combinées à volonté pour former différentes variantes de tour support.
